# EUROPEAN PATENT APPLICATION

(11) **EP 1 921 770 A1**
(43) Date of publication of application: **14.05.2008**
(21) Application number: 06797173.9
(22) Date of filing: 31.08.2006
(51) Int. Cl.: H04B 3/54, H02J 7/00, H02J 13/00, H04Q 9/00

(54) **PC ADAPTOR APPARATUS, PC SIGNAL REPRODUCING SYSTEM, PC SIGNAL REPRODUCING METHOD, PC SIGNAL REPRODUCING PROGRAM, OUTPUT APPARATUS CONTROL PROGRAM, PC ADAPTOR APPARATUS CONTROL PROGRAM, PC CONTROL PROGRAM, POWER LINE COMMUNICATION CONNECTOR, CRADLE APPARATUS USING THE SAME, AND POWER LINE COMMUNICATION REPRODUCING SYSTEM**

(30) Priority: 31.08.2005 JP 2005252045; 10.02.2006 JP 2006033417; 30.03.2006 JP 2006095707
(71) Applicant: MITSUBISHI MATERIALS CORPORATION, Chiyoda-ku, Tokyo 100-8117 (JP)
(72) Inventor: YAMASHITA, Nobuyuki, MITSUBISHI MATERIALS CORPORATION, Saitama 3688502 (JP); TARI, Kazuyoshi, MITSUBISHI MATERIALS CORPORATION, Saitama 3688502 (JP); NAKAMURA, Kenzo, MITSUBISHI MATERIALS CORPORATION, Saitama 3688502 (JP); NAGIRA, Tsumoru, MITSUBISHI MATERIALS CORPORATION, Saitama 3688502 (JP)
(74) Representative: HOFFMANN EITLE
(86) International application number: PCT/JP2006/317213
(87) International publication number: WO 2007/026818

(57) **Abstract**

The personal computer adaptor device is provided with an adaptor-side signal input terminal connectable to a headphone terminal for audio signals of a personal computer, a control signal output terminal connectable to a microphone terminal of the personal computer, a plug unit connectable to an outlet jack of a power line, a digital converter for converting audio signals inputted from the adaptor-side signal input terminal into digital signals, an adaptor-side power line communication transmitting unit for transmitting audio signals via the power line connected to a plug unit, an adaptor-side power line communication receiving unit for receiving control signals of the personal computer transmitted from the output device connected to the power line via the power line connected to the plug unit, and an analog converter for converting control signals into analog signals and outputting them from the control signal output terminal.

## Description

### TECHNICAL FIELD

The present invention relates to a personal computer adaptor device, a personal computer signal reproducing system, a personal computer reproducing method, a personal computer signal reproducing program, an output device control program, a personal computer adaptor device control program and a personal computer control program for reproducing audio signals and image signals by using a personal computer.
The present invention also relates to a power line communication connector device for reproducing audio signals and image signals via a power line, a cradle device and a power line communication reproducing system using the power line communication connector device.

The application concerned claims the right of priority to Japanese Patent Application No. 2005-252045 filed on August 31, 2005, Japanese Patent Application No. 2006-33417 filed on February 10, 2006, and Japanese Patent Application No. 2006-95707 filed on March 30, 2006, the content of which is cited herein.

### BACKGROUND ART OF THE INVENTION

For example, the speaker system described in Patent Document 1 has been proposed as a conventional technology of transmitting audio data from audio data transmitting devices (information transmitting devices) such as a CD player and a DVD player to a plurality of speakers to play the audio data.
In the speaker system, the audio data is transmitted from one audio data transmitting device to a plurality of speakers via a wireless communication means, thus making it possible to play different types of audio data through individual speakers.
Additionally, in recent years, personal computers are used to output and reproduce audio signals such as music or image signals such as static images and dynamic images recorded on a CD, a DVD, an HDD and the like through externally attached output devices (speakers and display devices).
Further, in recent years, portable music playing devices have gained popularity, and are able to store voice data such as music in a nonvolatile memory, for example, an HDD, and play the voice data. These portable music playing devices, which can be put into a pocket or the like and carried, are small in size and light in weight. They are commercially available and capable of storing large amounts of music tracks from several hundreds to several thousands. These portable music playing devices are in most cases without built-in speakers and therefore used in playing stored voice data through headphones or earphones. Some of the portable music playing devices are proposed that have functions to play the data by means of an externally attached speaker.
For example, Patent Document 2 has proposed a technology in which portable electronic devices such as a compact disc player and a digital still camera are used to transfer stored voice data to a speaker mounted on a cradle via a USB interface, thereby effecting amplification and sound.
PATENT DOCUMENT 1: Japanese Unexamined Patent Application, First Publication No. 2001-275194
PATENT DOCUMENT 2: Japanese Unexamined Patent Application, First Publication No. 2005-64694

### DETAILED DESCRIPTION OF THE INVENTION

### PROBLEMS TO BE SOLVED BY THE INVENTION

The following problems have been found in the above-described conventional technology.
A conventional speaker system plays data from a plurality of speakers in one room, with no consideration given to a case where a user moves to another room (for example, where he or she moves from the living room to the kitchen or the bathroom). Therefore, where the user moves to another room to play the data, he or she is required to carry a playing device such as a CD player or a personal computer to a room to which he or she has moved. Further, although the playing device is connectable wirelessly or the like to an output device such as a speaker or the like installed in another room, the user is required to move to a room in which the playing device is installed to operate the playing device, if he or she desires to change the music to be played and conduct a fast forward operation. In particular, where a personal computer is used to reproduce audio signals or image signals, a keyboard, a mouse or the like must be used on the basis of music- or image-dedicated software programs driven by the personal computer, thereby controlling operations such as changing the music to be played, because unlike a playing device dedicated to music or images such as a CD player and a DVD player, the personal computer is not provided with an interface such as dedicated operation buttons.

Additionally, a conventional portable music playing device without a built-in speaker is unable to continuously play music listened to through earphones or headphones in a room or the like by itself. Thus, the same music data is stored in another storage medium such as a CD-R or a copy thereof is stored in a sound-playable HDD of the personal computer, and the data or a copy thereof is played by using other devices installed in a room. In this instance, the music data must be copied, often resulting in inconvenience in view of copyright. Moreover, there are needs for installing another device in a room and driving the device. Still further, in the technology disclosed in Patent Document 2, a portable electronic device is connectable to a cradle built into a speaker to play data in a room. However, the speaker, which is built into the cradle, is limited in output and the like, difficult in playing the data at a high power and with a high quality, and is also limited in location installation positions. In addition, the technology also requires a USB interface to increase component costs of the portable music playing device.

The present invention has been made in view of the above problems, an object of which is to provide a personal computer adaptor device and a personal computer signal reproducing system, a personal computer reproducing method, a personal computer signal reproducing program, an output device control program, a personal computer adaptor device control program and a personal computer control program capable of reproducing audio signals and the like in a room different from that in which a personal computer is installed and also controlling the personal computer, which is a playing device.

Another object of the present invention is to provide a power line communication connector device which avoids increased costs of a portable playing device is, capable of continuously playing by a portable playing device in a room or the like and also capable of playing data froman output device such as an external speaker or the like installed in any given place, a cradle device using the power line communication connector device and a power line communication reproducing system.

### MEANS FOR SOLVING THE PROBLEMS

The personal computer adaptor device of the present invention is provided with an adaptor-side signal input terminal which is connectable to a PC-side signal output terminal for audio signals or image signals of a personal computer, a control signal output terminal which is connectable to an analog signal input terminal of the personal computer, a plug unit which is connectable to an outlet jack of a power line, a digital converter converting the audio signals or image signals inputted from the adaptor-side signal input terminal into digital signals, an adaptor-side power line communication transmitting unit of transmitting the thus converted audio signals or image signals via a power line connected to the plug unit, and an adaptor-side power line communication receiving unit receiving control signals of the personal computer transmitted from an output device connected to the power line via the power line connected to the plug unit, and an analog converter converting the control signals to analog signals and outputting the thus converted signals from the control signal output terminal.

The personal computer signal reproducing system of the present invention is provided with a personal computer adaptor device of the present invention, a PC-side signal output terminal for outputting audio signals or image signals to which the adaptor-side signal input terminal is connected, an analog signal input terminal for inputting analog signals to which the control signal output terminal is connected, a personal computer connected to a power line via the personal computer adaptor device, and an output device connected to the power line. The output device is provided with an output-side power line communication receiving unit connected to the power line to receive the audio signals or image signals via the power line, an output unit for reproducing the thus received audio signals or image signals, an operating unit inputting the control signals from the personal computer, and a control signal transmitting unit transmitting the control signals input into the operating unit to the personal computer adaptor device via the power line. The personal computer is provided with a controller controlling the output of the audio signals or the image signals on the basis of the control signals inputted from the analog signal input terminal.

The personal computer reproducing method of the present invention includes a step in which a control signal transmitting unit of an output device connected to a power line transmits control signals inputted from a personal computer via the power line, a step in which an adaptor-side power line communication receiving unit of a personal computer adaptor device receives the control signals via a plug unit connected to an outlet jack of the power line, a step in which an analog converter of the personal computer adaptor device converts the thus received control signals into analog signals, a step in which the analog converter outputs the control signals converted into the analog signals to the personal computer via a control signal output terminal connected to an analog signal input terminal of the personal computer from the analog signal input terminal, a step in which a controller of the personal computer controls the output of audio signals or image signals on the basis of the control signals inputted from the analog signal input terminal, a step in which the controller of the personal computer outputs the audio signals or the image signals from a PC-side signal output terminal on the basis of the control, a step in which a digital converter of the personal computer adaptor device converts the audio signals or the image signals inputted from the adaptor-side signal input terminal connected to the PC-side signal output terminal into digital signals, a step in which an adaptor-side power line communication transmitting unit of the personal computer adaptor device transmits the audio signals or the image signals converted into digital signals via the power line connected to the plug unit, a step in which an output-side power line communication receiving unit of the output device receives the audio signals or the image signals via the power line, and a step in which the output unit of the output device reproduces the thus received audio signals or image signals.

The personal computer signal reproducing program of the present invention is a personal computer signal reproducing program which is executable by a computer, including a step in which a control signal transmitting unit of an output device connected to a power line transmits control signals inputted from a personal computer via the power line, a step in which an adaptor-side power line communication receiving unit of a personal computer adaptor device receives the control signals via a plug unit connected to an outlet jack of the power line, a step in which an analog converter of the personal computer adaptor device converts the thus received control signals into analog signals, a step in which the analog converter outputs the control signals converted into analog signals via a control signal output terminal connected to an analog signal input terminal of the personal computer from the analog signal input terminal to the personal computer, a step in which a controller of the personal computer controls the output of audio signals or image signals on the basis of the control signals inputted from the analog signal input terminal, a step in which the controller of the personal computer outputs the audio signals or the image signals from a PC-side signal output terminal on the basis of the control, a step in which a digital converter of the personal computer adaptor device converts the audio signals or the image signals inputted from the adaptor-side signal input terminal connected to the PC-side signal output terminal into digital signals, a step in which an adaptor-side power line communication transmitting unit of the personal computer adaptor device transmits the audio signals or the image signals converted into digital signals via the power line connected to the plug unit,
a step in which an output-side power line communication receiving unit of the output device receives the audio signals or the image signals via the power line, and a step in which an output unit of the output device reproduces the thus received audio signals or image signals.

In the personal computer adaptor device, the personal computer signal reproducing system, the personal computer reproducing method and the personal computer signal reproducing program, when control signals (signals of music selection, play, stop, fast forward, fast rewind and the like) of a personal computer are inputted from an output device such as a speaker and transmitted via a power line, the control signals are received by an adaptor-side power line communication receiving unit of the personal computer adaptor device via the power line, and outputted to the personal computer from an analog signal input terminal of the personal computer. Therefore, the personal computer is able to control the output of audio signals or image signals on the basis of the control signals from the output device. Then, on the basis of the control signals, the audio signals or the image signals can be transmitted from a PC-side signal output terminal of the personal computer to the output device via the personal computer adaptor device through power line communications. Thereby, the output device is used to reproduce the audio signals or the image signals covering the operation content inputted from the output device.

As described above, the personal computer, which is a playing device, is not directly operated but can be remote-controlled from an output device via a personal computer adaptor device. Further, an analog signal output terminal and a PC-side signal output terminal normally equipped on the personal computer are used to input and output signals, thereby eliminating the necessity for changing or adding hardware such as addition of data transmitting/receiving functions through power line communications to the personal computer. Only installation of a control software program is sufficient. Further, control signals are decoded by the personal computer, thereby reducing production costs of a personal computer adaptor device in itself.

Additionally, the personal computer adaptor device of the present invention, which is connectable to a power input terminal of the personal computer, may be provided with an AC-DC converter converting alternating current voltage applied to a power line connected to the plug unit into direct current voltage and supplying the thus converted direct current voltage to the personal computer. Since the personal computer adaptor device is provided with the AC-DC converter, the AC-DC converter can also be used as a DC power source adaptor of the personal computer.

Still further, the personal computer adaptor device of the present invention is a headphone terminal in which the PC-side signal output terminal outputs the audio signal, which are analog signals, and the analog signal input terminal may be a microphone terminal or a line input terminal. More specifically, in the personal computer adaptor device, a headphone jack normally built in as a PC-side signal output terminal is used, and also a microphone terminal or a line input terminal normally built in as an analog signal input terminal is used, by which these terminals mounted as standard components on a personal computer can be diverted to reproduce audio signals or image signals through an external output device. It is also possible to input control signals from the output device.
Additionally, in the present specification, the above headphone terminal includes an earphone terminal.

Further, the personal computer adaptor device of the present invention is provided with a PC cable equipped with an input cable having the adaptor-side signal input terminal and an output cable having the control signal output terminal, a playing device cable having an audio signal output terminal for a playing device different from that of the personal computer and a playing device input/output terminal connected in a removable manner to a control signal input terminal, and a PLC-side connector is connectable to the PC cable with the digital converter and the analog converter and also can connect the playing device cable with the digital converter and the adaptor-side power line communication receiving unit, in which the PC cable and the playing device cable are respectively equipped with a common connector connected in a removable manner to the PLC-side connector and the respective common connectors are in the same connector shape.
In other words, the personal computer adaptor device is provided with a playing device cable having a common connector which is the same in connector shape as the PC cable, the playing device cable is connected to the PLC-side connector by means of the common connector in place of the PC cable, thereby an externally attached output device can be used to play data in a different playing device. Further, when it is connected to a different playing device, control signals corresponding to the playing device can be outputted from the playing device input/output terminal. In other words, firmware installed on an adaptor-side power line communication receiving unit can only be changed to output a predetermined control signal for every playing device. Therefore, hardware can be commonly used to reduce costs and easily cope with not only a personal computer but also a variety of playing devices.

The output device control program of the present invention includes a step in which a control signal transmitting unit of an output device connected to a power line transmits control signals inputted by a personal computer via the power line, a step in which an output-side power line communication receiving unit of the output device receives audio signals or image signals via the power line, and a step in which an output unit of the output device reproduces the thus received audio signals or image signals. The audio signals or the image signal received by the output-side power line communication receiving unit of the output device are received by a personal computer adaptor device via the power line, converted into analog signals, outputted to the personal computer adaptor device by the personal computer on the basis of the control signals output by the personal computer, converted into digital signals by the personal computer adaptor device, and transmitted via the power line.

The personal computer adaptor device control program of the present invention is a personal computer adaptor device control program which is executable by a computer, including a step in which an adaptor-side power line communication receiving unit of a personal computer adaptor device receives control signals of a personal computer transmitted from an output device connected to a power line via the power line via a plug unit connected to an outlet jack of the power line, a step in which an analog converter of the personal computer adaptor device converts the thus received control signals into analog signals, a step in which the analog converter outputs the control signals converted into analog signals from the analog signal input terminal to the personal computer via a control signal output terminal connected to an analog signal input terminal of the personal computer, a step in which a digital converter of the personal computer adaptor device converts the audio signals or the image signal inputted from the personal computer on the basis of the control signals via an adaptor-side signal input terminal connected to the PC-side signal output terminal outputted via the PC-side signal output terminal into digital signals, and a step in which an adaptor-side power line communication transmitting unit of the personal computer adaptor device transmits the audio signals or the image signals converted into digital signals to the output device via the power line connected to the plug unit.

Further, the personal computer adaptor device control program of the present invention includes a step in which an audio signal output terminal of a playing device different from the personal computer is connected to the digital converter via a playing device cable, a control signal input terminal of the above-described playing device is connected to the adaptor-side power line communication receiving unit via the playing device cable, and when input is made to switch to a different playing device, the control signals are converted so as to correspond to the different playing device, and the thus converted control signals are outputted to the control signal input terminal via the playing device cable.

The personal computer control program of the present invention is a personal computer control program which is executable by a computer, including a step in which a controller of a personal computer controls with respect to the output of audio signals or image signals on the basis of control signals inputted via an analog signal input terminal and a step in which the controller outputs the audio signals or the image signals to the personal computer adaptor device on the basis of the control via a PC-side signal output terminal connected to an adaptor-side signal input terminal of the personal computer adaptor device. The control signals inputted via the analog signal input terminal are received by the personal computer adaptor device from the output device via a power line, also converted into analog signals, and inputted via a control signal output terminal of the personal computer adaptor device connected to the analog signal input terminal.

The power line communication connector device of the present invention is provided with a signal input terminal which is connectable to a signal output terminal for a playing device for audio signals or image signals, a plug unit connected to a power line, and a power line communication transmitting means for transmitting the audio signals or the image signal inputted via the signal input terminal via the power line connected to the plug unit.

In the power line communication connector device, a power line communication transmitting means transmits audio signals or image signals inputted from a signal input terminal via a power line connected to a plug unit, thereby making it possible to receive the signals by other playing devices (external speakers or the like) corresponding to power line communications connected to the power line and reproducing the audio signals or the image signals. In other words, a signal output terminal normally equipped on a playing device is used to input signals, thereby eliminating the necessity for adding data transmitting functions of power line communications to the playing device. Therefore, the playing device is not increased in cost, and even an ordinary playing device can be used to easily external-play. Further, since audio signals and the like are transmitted via a power line, these signals can be continuously reproduction by using an output device such as an externally attached speaker or the like connected to the power line at any given position.

The power line communication reproducing system of the present invention is provided with a power line communication connector device of the present invention and an output device connected to a power line, in which the output device is provided with a power line communication receiving means connected to the power line for receiving the audio signals or the image signals via the power line and an output means for reproducing the thus received audio signals or image signal.

Since the power line communication reproducing system is provided with the power line communication connector device of the present invention and an output device which can receive audio signals and image signals via a power line, the output device is connected to the power line via an outlet or the like at any given position, by which an output device connected to the outlet at any given position can be used to reproduce the thus received signals at any given position. Further, an output device connected to outlets at a plurality of given positions can be used to reproduce the signals at a plurality of given positions.

The cradle device of the present invention is provided with the power line communication connector device of the present invention and a cradle main body which can be placed on a portable playing device, in which the power line communication connector device is installed on the cradle main body.

Into the cradle device, a power line communication connector device of the present invention is mounted on a cradle main body by placing on a portable playing device, thus making it possible to effect a continuous play by using an output device connected to a power line, with the portable playing device placed on the cradle main body.

Further, into the cradle device of the present invention, the signal output terminal is a headphone jack outputting the audio signals which are analog signals, and the signal input terminal is a headphone plug inputting the audio signals, which are analog signals. Into the cradle device, by only inserting a headphone plug into the headphone jack of a portable playing device as a signal input terminal for inputting the audio signals, which are analog signals, it is possible to easily provide a continuous play of data by means of an output device such as an externally attached speaker. Additionally, in the present specification, the headphone jack and the headphone plug include an earphone jack and an earphone plug.

Further, the cradle device of the present invention is provided inside the cradle main body with a battery mechanism in which a battery charger built into the portable playing device can be charged by electricity supplied via a power line connected to the plug unit. The cradle device is able to easily charge the thus placed portable playing device by using the battery mechanism inside the cradle main body.

Further, in the cradle device of the present invention, the plug unit is connectable to a power line of a vehicle. In other words, in the cradle device, since a plug unit is connectable to the power line of the vehicle, reproduction can be made via power line communications even in the vehicle, which is a movable body.

Further, into the cradle device of the present invention, the plug unit is a cigarette lighter socket plug which is attached in a detachable manner to a cigarette lighter socket connected to a power line of a vehicle. Into the cradle device, since the plug unit is a cigarette lighter socket plug, by only inserting the plug unit into a cigarette lighter socket installed inside the vehicle it is possible to make reproduction by means of an output device such as a speaker corresponding to power line communications inside the vehicle.

Still further, the power line communication reproducing system of the present invention is provided with a control signal transmitting means in which the output device transmits control signals of the playing device to the power line communication connector device via a power line, and an operating unit for inputting the control signals. The power line communication connector device is provided with a control output terminal which is connectable to a control input terminal of the playing device, a connector-side power line communication receiving means for receiving the control signals via the power line, and a control signal output unit for sending the thus received control signals to the playing device via the control input terminal connected to the control output terminal.
In the power line communication reproducing system, control signals (signals of music selection, play, stop, fast forward, fast rewind and the like) for a playing device can be transmitted via the power line from the control signal transmitting means of an output device to a power line communication connector device, and control signals received from a connector-side power line communication receiving means are sent from a control signal output unit via a control output terminal and a control input terminal to the playing device, thus making it possible to remote-control the playing device from the output device such as a speaker.

In addition, in the power line communication reproducing system of the present invention, the output means is provided with a display unit for displaying information on the playing content included in the thus received audio signals or image signals.
The power line communication reproducing system displays the information on the playing content on the display unit, thus making it possible to confirm the playing content such as the title of the song and name of the artist from the output device such as a speaker.

### ADVANTAGEOUS EFFECTS OF THE INVENTION

The present invention is able to remote-control a personal computer via a personal computer adaptor device from an output device, without direct operation of the personal computer. Thereby, an output device installed in a room different from that at which the personal computer is installed can be used to play audio signals or image signals covering a desired content. Further, an analog signal output terminal and a PC-side signal output terminal normally equipped on a personal computer are used to input or output signals, thereby eliminating the necessity for changing or adding hardware which is to tack on functions of transmitting and receiving power line communications to the personal computer, and only installing a software program for controlling is sufficient. As a result, there is no increase in cost of the personal computer, and even an ordinary personal computer is able to easily carry out external-play and perform remote control.

According to the present invention, audio signals or image signals inputted from a signal input terminal are transmitted via a power line connected to a plug unit, by which these signals can be reproduced by other output devices (output devices such as externally attached speakers) corresponding to power line communications connected to the power line. There is no need for tacking on additional functions to a playing device such as a portable music playing device and there is no need increase the cost of the playing device. Further, since externally attached speakers or the like connected via a power line are used to reproduce signals, it is possible to easily carry out a high-output and high-quality continuous play at any given position.

### BRIEF DESCRIPTION OF THE DRAWINGS

FIG. 1 is a block diagram showing a personal computer adaptor device in the personal computer adaptor device, the personal computer signal reproducing system, the personal computer reproducing method, the personal computer signal reproducing program, the output device control program, the personal computer adaptor device control program and the personal computer control program of Embodiment 1 in the present invention.
FIG. 2 is a drawing showing Embodiment 1 of the present invention and a block diagram showing the personal computer signal reproducing system.
FIG. 3 is a drawing showing Embodiment 1 of the present invention and a perspective view of maj or parts showing a connection of the personal computer adaptor device with the personal computer.
FIG. 4 is a drawing showing Embodiment 1 of the present invention and a block diagram showing the personal computer signal reproducing system.
FIG. 5 is a drawing showing Embodiment 1 of the present invention and a front elevational view showing an externally attached speaker device.
FIG. 6 is a drawing showing Embodiment 1 of the present invention and a flow chart of actions of a controller by the personal computer reproducing method.
FIG. 7 is a block diagram showing a personal computer adaptor device in the personal computer adaptor device, the personal computer signal reproducing system, the personal computer reproducing method, the personal computer signal reproducing program, the output device control program, the personal computer adaptor device control program and the personal computer control program of Embodiment 2 in the present invention.
FIG. 8 is a drawing showing Embodiment 2 of the present invention and a plan view of the personal computer adaptor device and individual cables.
FIG. 9 is a drawing showing Embodiment 2 of the present invention and a perspective view showing a connection of the personal computer adaptor device with the portable audio player.
FIG. 10 is a drawing showing the power line communication connector device of Embodiment 3 in the present invention, the cradle device and the power line communication reproducing system using the cradle device or a block diagram showing the power line communication reproducing system.
FIG. 11 is a drawing showing Embodiment 3 of the present invention and a block diagram of the power line communication reproducing system.
FIG. 12 is a drawing showing the power line communication connector device of Embodiment 4 in the present invention, the cradle device and the power line communication reproducing system using the cradle device or a block diagram showing the power line communication reproducing system.
FIG. 13 is a drawing showing Embodiment 4 of the present invention and a front elevational view showing an externally attached speaker device.

### DESCRIPTION OF THE REFERENCE SYMBOLS

- 1, 100:: personal computer adaptor device
- 2:: personal computer
- 3:: externally attached speaker device (output device)
- 4:: headphone terminal (PC-side signal output terminal)
- 5:: microphone terminal (analog signal input terminal)
- 6:: adaptor-side signal input terminal
- 7:: control signal output terminal
- 8:: outlet jack
- 9:: plug unit
- 10:: digital converter
- 11:: adaptor-side power line communication transmitting unit
- 12:: adaptor-side power line communication receiving unit
- 13:: analog converter
- 16:: operating unit
- 18:: liquid crystal display unit (display unit)
- 102A:: portable audio player (playing device)
- 102B:: cellular phone (playing device)
- 123:: PC cable
- 104:: PLC-side connector
- 123A:: portable player cable (playing device cable)
- 105:: common connector
- 106A, 106B:: playing device input/output terminal
- 123B:: cellular phone cable (playing device cable)
- 201:: portable music playing device (playing device, portable playing device)
- 202, 222:: externally attached speaker device (output device)
- 203:: cradle device
- 206:: headphone jack (signal output terminal)
- 208:: battery charger
- 210, 230:: cradle main body
- 211, 240:: power line communication connector device
- 212:: headphone plug (signal input terminal)
- 214:: outlet plug (plug unit)
- 215:: power line communication transmitting unit (power line communication transmitting means)
- 217:: battery mechanism
- 218:: power line communication receiving unit (power line communication receiving means)
- 219, 229:: output unit (output means)
- 231:: control signal transmitting unit (control signal transmitting means)
- 232:: control input terminal
- 233:: control output terminal
- 234:: connector-side power line communication receiving unit (connector-side power line communication receiving means)
- 235:: control signal output unit
- 236:: liquid crystal display unit (display unit)
- 238:: operating unit
- L:: power line

### BEST MODE FOR CARRYING OUT THE INVENTION

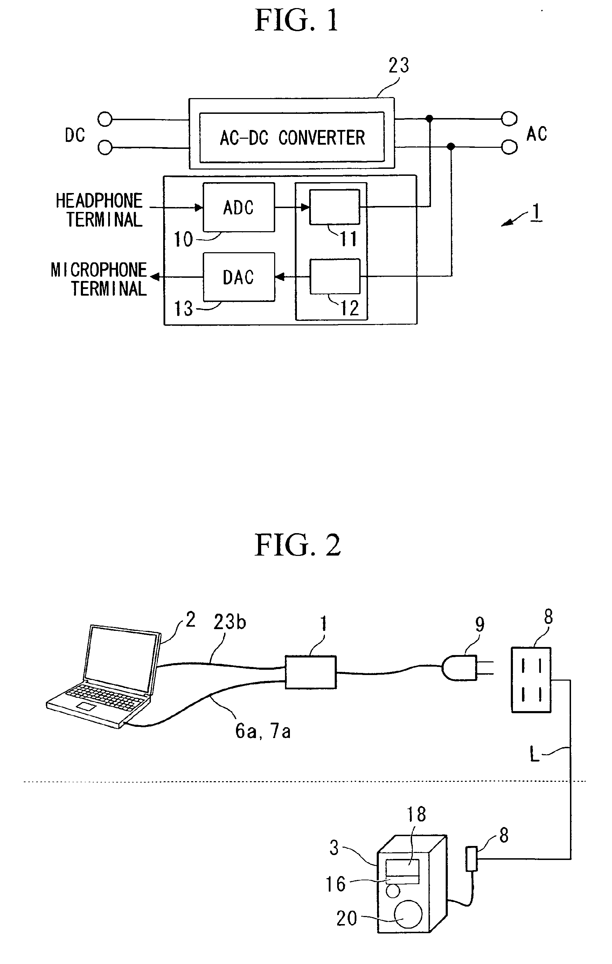

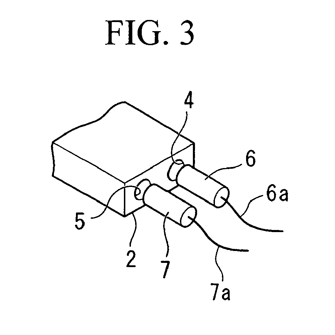

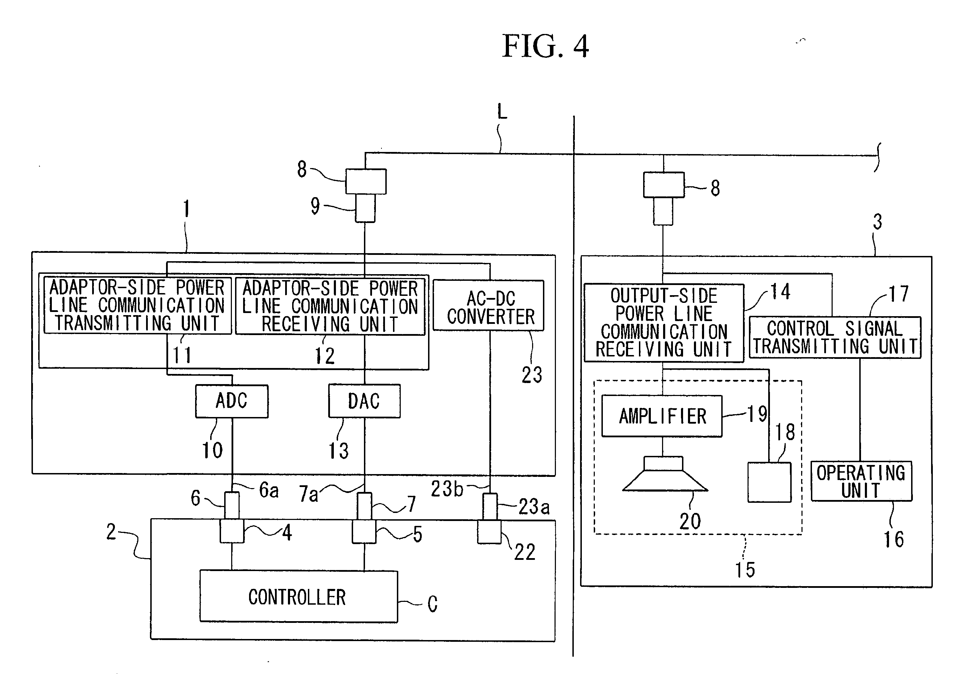

An explanation will be made for the personal computer adaptor device, the personal computer signal reproducing system, the personal computer reproducing method, the personal computer signal reproducing program, the output device control program, the personal computer adaptor device control program and the personal computer control program of Embodiment 1 in the present invention by referring to FIG. 1 to FIG. 6.

As shown in FIG. 1 to FIG. 4, the personal computer adaptor device 1 of the present embodiment is an adaptor for reproducing audio signals outputted from a laptop personal computer 2 by using an externally attached speaker device (an output device) 3 installed in a different room or the like, for example, via a power line L which is wired to an ordinary house or the like to supply electronic power to a plurality of electronic devices.

The personal computer adaptor device 1 is provided with an adaptor-side signal input terminal 6 which is connectable to a headphone terminal (PC-side signal output terminal of audio signals, which are analog signals) 4 of the personal computer 2, a control signal output terminal 7 which is connectable to a microphone terminal (analog signal input terminal) 5 of the personal computer 2, a plug unit 9 which is connectable to an outlet jack 8 of a power line L, a digital converter 10 for converting audio signals inputted via the adaptor-side signal input terminal 6 into digital signals, an adaptor-side power line communication transmitting unit 11 for transmitting the thus converted audio signals via the power line L connected to the plug unit 9, an adaptor-side power line communication receiving unit 12 for receiving control signals of the personal computer 2 transmitted from an externally attached speaker device 3 connected to the power line L via the power line L connected to the plug unit 9, and an analog converter 13 for converting the thus received control signals into analog signals, thereby outputting them fromthe control signal output terminal 7.

Further, the personal computer signal reproducing system of the present embodiment is provided with the above-described personal computer adaptor device 1, a personal computer 2 having a headphone terminal 4 for outputting audio signals to which the adaptor-side signal input terminal 6 is connected and also having a microphone terminal 5 for inputting analog signals to which the control signal output terminal 7 is connected, which is connected to the power line L via the personal computer adaptor device 1, and an externally attached speaker device 3 connected to the power line L.

The externally attached speaker device 3 is provided with an output-side power line communication receiving unit 14 for receiving audio signals via a power line L connected to the power line L, an output unit 15 for reproducing the thus received audio signals, an operating unit 16 for inputting control signals of the personal computer 2, a control signal transmitting unit 17 for transmitting the thus inputted control signals to the personal computer adaptor device 1 via the power line L, and a liquid crystal display unit (display unit) 18 for displaying information on the playing content of the thus received audio signals.

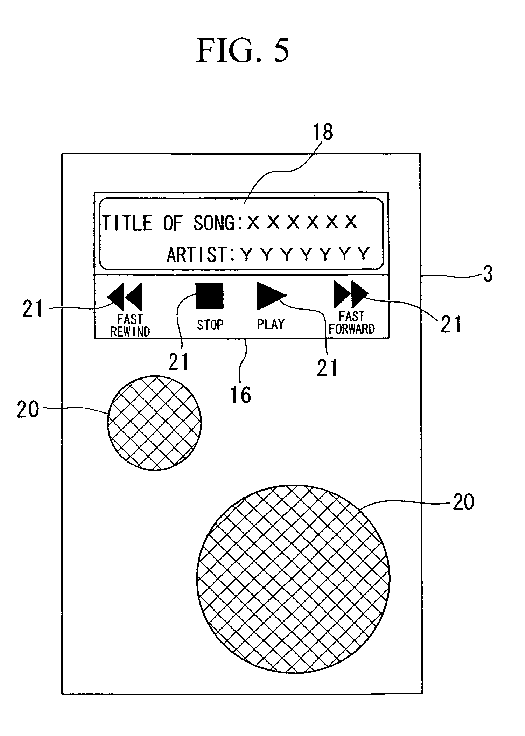

The output unit 15 is constituted with an amplifier 19 for amplifying audio signals from the output-side power line communication receiving unit 14 and a speaker unit 20 for phonetically outputting the thus amplified audio signals.
As shown in FIG. 5, the operating unit 16 is provided with a plurality of operation buttons 21 provided in front of the externally attached speaker device 3 and corresponding to each control signal of the personal computer 2. Further, the operating unit 16 is connected to a control signal transmitting unit 17.

Further, the personal computer 2 is provided with a controller C for controlling the output of audio signals on the basis of control signals inputted via the microphone terminal 5.
Still further, the personal computer adaptor device 1 is connectable to a power input terminal 22 of the personal computer 2 via a main power plug 23a and also connected to an outlet jack 8 of the power line L and provided with an AC-DC converter 23 for converting the alternating current voltage applied to the power line L via the plug unit 9 into direct current voltage and supplying it to the personal computer 2. Then, the personal computer 2 is to receive the electric power from the AC-DC converter 23 and also able to charge a built-in battery charger (not illustrated).

The adaptor-side signal input terminal 6 is connected to the digital converter 10 via a cable 6a, and the control signal output terminal 7 is connected to the analog converter 13 via a cable 7a.
Further, the main power plug 23a is connected to the AC-DC converter 23 through a power source wire 23b.

The personal computer 2 is able to retain and store audio data such as music in a built-in HDD and a nonvolatile memory (not illustrated) or the like, in which a software program for playing the thus stored audio data is installed. Additionally, the personal computer 2 stores the audio data in formats such as MP3 (MPEG Audio Layer III) and WAVE, having a storage range from several hundred megabytes to several dozen giga bytes.

Additionally, the respective data processing units in the present personal computer signal reproducing system, the personal computer adaptor device 1, the personal computer 2 and the externally attached speaker device 3, that is, the adaptor-side power line communication transmitting unit 11, the adaptor-side power line communication receiving unit 12, the output-side power line communication receiving unit 14, the control signal transmitting unit 17, the digital converter 10, the analog converter 13, the controller C and the like may be realized by means of special hardware, or each of the processing units may be constituted with a memory and a CPU (central processing unit) as a computer system, into the memory of which programs for realizing functions of each processing unit, the audio data communication method and playing method of the present embodiment to be described later are loaded and executed to realize the functions thereof.

More specifically, these described programs may be programs which can be read by a computer to partially realize the above-described functions and the personal computer signal reproducing method to be described later. In particular, the controller C of the personal computer 2 is designed so as to execute individual orders on the basis of installed software.
Further, the above programs may be those which can be realized by combination with a program in which the above-described functions have already been recorded in the computer system, that is, a so-called difference file (difference program).

Further, the above programs may be those which are transmitted from a computer system in which these programs are stored in a storage device or the like via a transmission medium or those which are transmitted to another computer system by a transmitted wave in a transmission medium. The transmission medium is a medium having the function to transmit information, for example, a network (communication network) such as the Internet and a communication circuit (communication line) such as a power line or a telephone circuit.
Further, the above memory is that which is constituted with a nonvolatile memory, for example, a hard disc device, an optical magnetic disc device and a flash memory, a recording medium which can only read such as a CD-ROM, a volatile memory such as a RAM (Random Access Memory) and a recording medium which can read only and write data of a computer such as that in combination thereof.

Next, an explanation will be made for a method for reproducing audio signals by means of the personal computer signal reproducing system of the present embodiment by referring to FIG. 1 to FIG. 6.

First, in the personal computer 2, a software program dedicated to playing audio data is driven.
An explanation will be made for a case where a user is in a room different from that in which the personal computer 2 is set but in which an externally attached speaker device 3 is set. First, when the user presses any one of operation buttons 21 on an operating unit 16 of an externally attached speaker device 3 connected to a power line L, a control signal transmitting unit 17 transmits control signals corresponding to the operation button 21 via the power line L.
Next, the adaptor-side power line communication receiving unit 12 of the personal computer adaptor device 1 receives the control signals via a plug unit 9 connected to an outlet jack 8 of the power line L.

Further, the thus received control signals are converted into analog signals by an analog converter 13 of a personal computer adaptor device 1, and the thus converted control signals are outputted to the personal computer 2 via a control signal output terminal 7 connected to a microphone terminal 5 of the personal computer 2 and the microphone terminal 5.

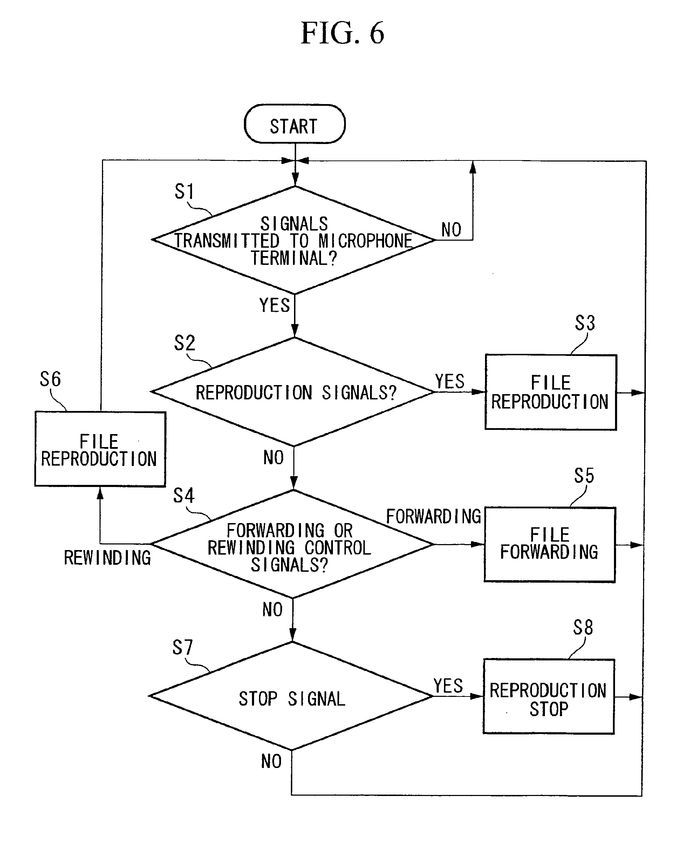

Next, as shown in FIG. 6, the controller C of the personal computer 2 decodes control signals inputted via the microphone terminal 5 on the basis of an installed software program 5 and controls the output of audio signals on the basis of the thus decoded control signals. First, it is determined whether control signals are inputted via the microphone terminal (Step S1). Then, where the control signals are inputted, it is determined whether the control signals are playing signals of a predetermined audio file (Step S2). Where the thus inputted control signals are playing signals of the predetermined audio file, the controller C outputs the audio signals of the predetermined audio file from a headphone terminal 4 (Step S3). Then, the digital converter 10 of the personal computer adaptor device 1 converts the audio signals inputted via the adaptor-side signal input terminal 6 connected to the headphone terminal 4 into digital signals.

Moreover, an adaptor-side power line communication transmitting unit 11 of the personal computer adaptor device 1 transmits the thus converted audio signals to an externally attached speaker device 3 via a power line L connected to a plug unit 9.
An output-side power line communication receiving unit 14 of the externally attached speaker device 3 receives audio signals via the power line L, an amplifier 19 of an output unit 15 amplifies the thus received audio signals, and a speaker unit 20 phonetically outputs the audio signals and reproduces them.

Where information on the playing content is included in audio signals, the information on the playing content is displayed on a liquid crystal display unit 18. It is, therefore, possible to confirm the playing content such as the title of the song and name of the artist by the externally attached speaker device 3.

Where control signals inputted fromthe externally attached speaker device 3 via the microphone terminal 5 are not playing signals of a predetermined audio file but file-forwarding or file-rewinding control signals, the controller C determines whether the thus inputted control signals are predetermined file-forwarding control signals or file-rewinding control signals (Step S4). Where the thus inputted control signals are the file-forwarding control signals, the controller C gives a file-forwarding order of the predetermined audio file (Step S5). In contrast, where the thus inputted control signals are file-rewinding control signals, the controller C gives a file-rewinding order of the predetermined audio file (Step S6). On the basis of the orders from the controller C, files are sent or returned, and then specified audio signals are transmitted to the externally attached speaker device 3 by the same procedure as that of the above processing via the personal computer adaptor device 1 and the power line L and reproduced. Further, where the control signals are inputted via the microphone terminal 5 but not playing signals of a predetermined audio file or file-forwarding or file-rewinding control signals, the controller C determines whether the thus inputted control signals are playing-stop signals (Step 7). Where the thus inputted control signals are the playing-stop signals, the controller C gives a playing-stop order (Step S8). The playing and output are stopped at the externally attached speaker device 3 on the basis of the stop order from the controller C.

As described above, the present embodiment is able to remote-control the personal computer 2 via the personal computer adaptor device 1 from the externally attached speaker device 3, without directly operating the personal computer 2. Therefore, a user operates the externally attached speaker device 3 in a room different from that in which the personal computer 2 is set, thus making it possible to play desired audio data without moving to the other room and also control the personal computer 2.

Further, the headphone terminal 4 and the microphone terminal 5 equipped on the personal computer 2 are used to input and output signals, thereby eliminating the necessity for changing or adding hardware which is to tack on functions of transmitting and receiving power line communications to the personal computer 2, and only installing a software program for control is sufficient. As a result, there is no increase in cost of the personal computer 2 and even an ordinary personal computer 2 is able to easily carry out external reproduction and perform the remote control.

Further, the load of decoding control signals is to be assumed by the personal computer 2, thereby making it possible to reduce costs of manufacturing the personal computer adaptor device 1 in itself.
Moreover, since the personal computer adaptor device 1 is provided with an AC-DC converter 23, it is possible to use the AC-DC converter 23 also as a DC power source adaptor of the personal computer 2.

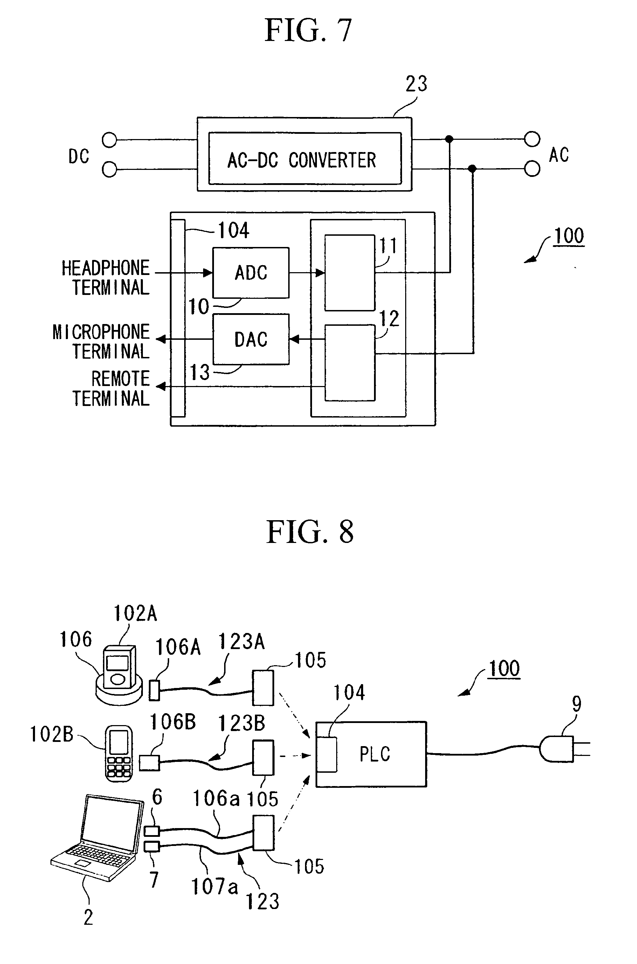

Next, an explanation will be made for the personal computer adaptor device, the personal computer signal reproducing system, the personal computer reproducing method, the personal computer signal reproducing program, the output device control program, the personal computer adaptor device control program and the personal computer control program of Embodiment 2 in the present invention by referring to FIG. 7 to FIG. 9. Additionally, in explaining the following embodiment, the same constituents as those explained in the above embodiment will be given the same symbols or numerals, with explanation thereof omitted.

Embodiment 2 is different from Embodiment 1 in the following. Specifically, in Embodiment 1, the cable 6a having an adaptor-side signal input terminal 6 and the cable 7a having a control signal output terminal 7 are connected as a personal computer exclusive-use cable fixedly to the digital converter 10 and the analog converter 13. In contrast, in a personal computer adaptor device 100 of Embodiment 2, as shown in FIG. 7 to FIG. 9, in order for a portable audio player 102A, which is a playing device different from the personal computer, and also a cellular phone 102B to be connected, a PC cable 123 exclusively used for a personal computer is connected in a removable manner to the digital converter 10 and the analog converter 13. The personal computer adaptor device 100 is also provided with a portable player cable 123A (playing device cable) and a cellular phone cable 123B (playing device cable) which is connectable in a removable manner to the portable audio player 102A and the cellular phone 102B.

The personal computer adaptor device 100 of Embodiment 2 is provided with a PC cable 123 equipped with an input cable 106a having an adaptor-side signal input terminal 6 and an output cable 107a having a control signal output terminal 7, a portable player cable 123A having a playing device input/output terminal 106A connected in a removable manner to the audio signal output terminal (headphone terminal: not illustrated) and the control signal input terminal (remote terminal: not illustrated) of the portable audio player 102A, a cellular phone cable 123B having a playing device input/output terminal 106B connected in a removable manner to the audio signal output terminal (headphone terminal: not illustrated) and the control signal input terminal (remote terminal: not illustrated) of the cellular phone 102B, and a PLC-side connector 104 by which the PC cable 123 is connectable to the digital converter 10 and the analog converter 13, and a portable player cable 123A or a cellular phone cable 123B is connectable to the digital converter 10 and the adaptor-side power line communication receiving unit 12.

Further, the PC cable 123, the portable player cable 123A and the cellular phone cable 123B are respectively provided with common connectors 105 connected in a removable manner to the PLC-side connector 104. The respective common connectors 105 are in the same connector shape.
Additionally, the PC cable 123, the portable player cable 123A and the cellular phone cable 123B are respectively provided with DC wires (not illustrated) connectable to the AC-DC converter 23. The personal computer 2, the portable audio player 102A and the cellular phone 102B can be charged via the DC wires.

The portable audio player 102A having a built-in HDD or memory for recording audio data is provided with a cradle 106 to which a charging DC wire and the portable player cable 123A are connected. Further, the cellular phone 102B having a built-in HDD or memory for recording audio data is provided with audio reproducing functions.

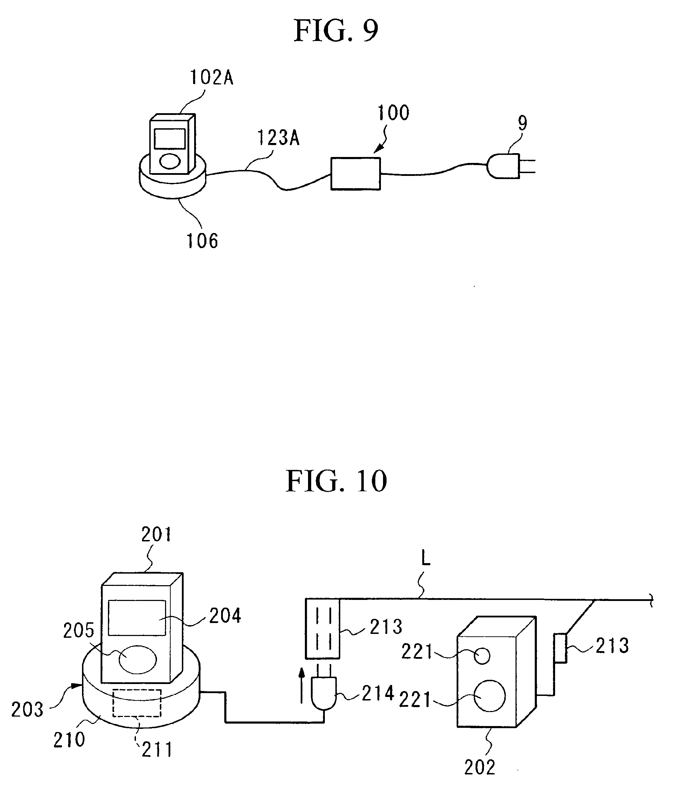

Where the personal computer 2 is used to reproduce data, the personal computer adaptor device 100 connects the personal computer 2 with a PLC-side connector 104 via the PC cable 123. However, where it is desired to use the portable audio player 102A for playing data, the PC cable 123 is removed, and as shown in FIG. 9, the common connector 105 of the portable player cable 123A is connected to the PLC-side connector 104 and also a playing device input/output terminal 106A is connected to the audio signal output terminal and the control signal input terminal equipped on the cradle 106 of the portable audio player 102A.

Further, where a cellular phone 102B is used to carry out reproduction, the PC cable 123 or the portable player cable 123A connected to the PLC-side connector 104 is removed, and a common connector 105 of the cellular phone cable 123B is connected to the PLC-side connector 104 and the playing device input/output terminal 106B is also connected to the audio signal output terminal and the control signal input terminal of the cellular phone 102B.
Moreover, firmware inside the adaptor-side power line communication receiving unit 12 is changed for the thus connected portable audio player 102A or cellular phone 102B by change-over and input of the personal computer adaptor device 100 in itself or a playing device from an externally attached speaker device 3 and set in such a manner that control signals transmitted from the externally attached speaker device 3 can be converted into control signals corresponding to the portable audio player 102A or the cellular phone 102B and then outputted.

In other words, the personal computer adaptor device 100 is provided with the PC cable 123, the portable player cable 123A and the cellular phone cable 123B. Further, since the common connector 105 of the portable player cable 123A has the same shape as a common connector 105 of the cellular phone cable 123B, in place of the PC cable 123, the portable player cable 123A or the cellular phone cable 123B is connected to the PLC-side connector 104 with the common connector 105, by which signals can be reproduced for the portable audio player 102A or the cellular phone 102B by using the externally attached speaker device 3.

Further, upon connection to these different playing devices (the portable audio player 102A and the cellular phone 102B), control signals corresponding to the playing device canbe outputted from the playing device input/output terminals 106A and 106B. In other words, only changing firmware is sufficient in outputting the control signals set in advance for every playing device. Therefore, hardware can be commonly used and also a cable low in price can be replaced to cope with each playing device, thereby reducing the cost of the hardware. Further, there is no need for protecting copyrights or coping with a compression method different in each playing device. Thereby, in addition to the personal computer 2, various playing devices including the portable audio player 102A and the cellular phone 102B can be easily handled at a lower cost.

In the above embodiment, a laptop personal computer 2 is used. However, a desktop personal computer or a PDA may be used.
Further, the microphone terminal 5 is used as an analog signal input terminal of the personal computer 2. However, a line input terminal may be similarly used.

In the above embodiment, audio signals from the personal computer 2 are used to reproduce voice. However, image signals (including picture signals) may be used to reproduce images (pictures). In this instance, an image display device such as a liquid crystal display is used as an output device which is to be connected to a power line L.
Further, it is also acceptable that Dolby (registered trade mark) control or equalizer control may be performed at the externally attached speaker device 3.

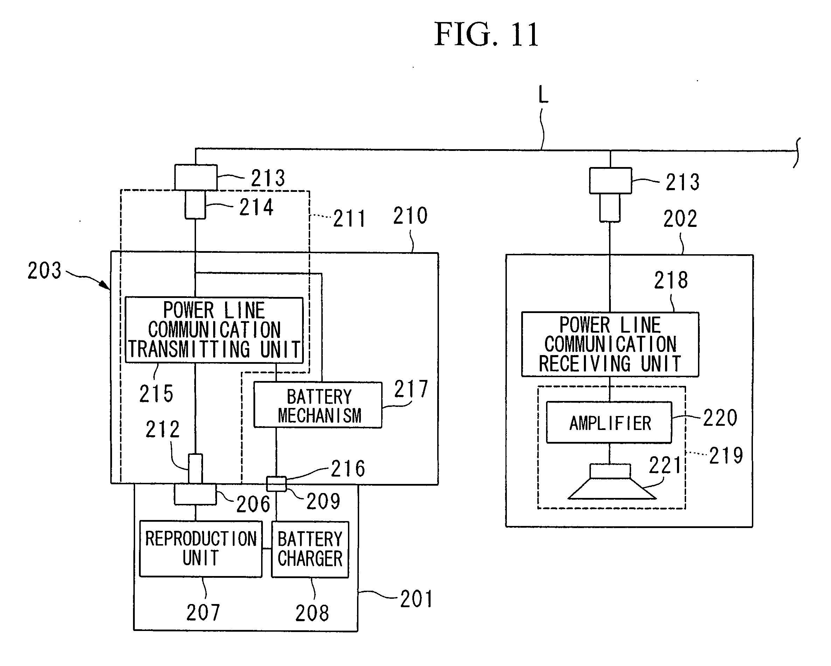

Next, an explanation will be made for Embodiment 3 of the power line communication connector device of the present invention, the cradle device using the power line communication connector device and the power line communication reproducing system by referring to FIG. 10 and FIG. 11. In the following embodiment, the same constituents as those of the above embodiments will be given the same symbols or numerals, with explanation thereof omitted.

As shown in FIG. 10 and FIG. 11, the power line communication reproducing system of the present embodiment is to reproduce audio signals outputted from a portable music playing device 201 (a playing device or a portable playing device), for example, via a power line L wired to ordinary houses in general to supply electricity to a plurality of electronic devices by using an externally attached speaker device (an output device) 2 installed indoors. In other words, the power line communication reproducing system is provided with a cradle device 203 for placing the portable music playing device 201 and an externally attached speaker device 202 connected to the power line L.

The portable music playing device 201 is a digital audio player for storing and recording voice data such as music in a built-in HDD, a nonvolatile memory (not illustrated) and the like. The portable music playing device 201 stores the voice data in formats such as MP3 (MPEGAudio Layer III) and WAVE, having a storage range from several hundred megabytes to several dozen giga bytes.

The portable music playing device 201 is provided with a liquid crystal display unit 204 for displaying data and information such as voice data of music and the like, an operating unit 205 for conducting various operations, a reproduction unit 207 composed of an electronic circuit or the like for playing voice data read out from an HDD, a nonvolatile memory or the like and outputting the data to a headphone jack (signal output terminal) 206 and a battery charger 208 for supplying electricity to respective built-in units. Further, the portable music playing device 201 is provided with an audio signal headphone jack 206 but not provided with a built-in speaker. Moreover, the portable music playing device 201 is provided with a charging terminal 209 connected to a battery charger 208 to charge the battery charger 208.

The cradle device 203 is provided with a cradle main body 210 which can place the portable music playing device 201 and a power line communication connector device 211 equipped on the cradle main body 210.
The power line communication connector device 211 is provided with a headphone plug (signal input terminal) 212 which is connectable to the headphone jack 206 of the portable music playing device 201, an outlet plug (plug unit) 214 connected to a power line L via an outlet 213, and a power line communication transmitting unit (power line communication transmitting means) 215 composed of an electronic circuit or the like for transmitting via the power line L connected to the outlet plug 214 audio signals, which are analog signals inputted from the headphone plug 212, after converting the audio signals into digital signals.

Further, the cradle device 203 is provided with a power supply terminal 216 equipped so as to be in contact with the charging terminal 209 of the portable music playing device 201 placed on the cradle main body 210 and a battery mechanism 217 composed of an electronic circuit or the like which can charge the battery charger 208 of the portable music playing device 201 by electric power supplied via the power line L and the power supply terminal 216 connected to the outlet plug 214.

The externally attached speaker device 202 is provided with a power line communication receiving unit (power line communication receiving means) 218 composed of an electronic circuit or the like connected via the outlet 213 to a power line L to receive audio signals, which are digital signals, via the power line L and convert them into analog signals and an output unit (output means) 219 for reproducing the thus received audio signals. The output unit 219 is constituted with an amplifier 220 for amplifying the audio signals from the power line communication receiving unit 218 and a speaker unit 221 for phonetically outputting the thus amplified audio signals.

Next, an explanation will be made for a method for reproducing audio signals by the power line communication reproducing system of the present embodiment.

First, the portable music playing device 201 is placed on the cradle device 203, by which a charging terminal 209 is brought into contact with a power supply terminal 216, and a battery mechanism 217 supplies electricity to a battery charger 208 via a power line L, the power supply terminal 216 and the charging terminal 209, thereby automatically charging the battery charger 208. Further, when the portable music playing device 201 is placed on the cradle device 203, a headphone plug 212 of the cradle device 203 is inserted into a headphone jack 206. Moreover, the portable music playing device 201 may be placed on the cradle device 203 in such a manner that the headphone jack 206 and the headphone plug 212 can be positioned with each other and the headphone plug 212 can be inserted into the headphone jack 206.

On the other hand, the externally attached speaker device 202 is connected to the power line L via an outlet 213. With this state being kept, the operating unit 205 of the portable music playing device 201 is operated to read out voice data such as desired music and play the data. In this instance, the voice data is subjected to DA conversion by the reproduction unit 207, converted into audio signals, which are analog signals, and outputted to a headphone jack 206. The audio signals outputted from the headphone jack 206 are inputted into the cradle device 203 via the headphone plug 212, and subjected to AD conversion by a power line communication transmitting unit 215, converted into digital signals, and thereafter transmitted to the power line L via the outlet plug 214.

Next, the power line communication receiving unit 218 of the externally attached speaker device 202 receives the thus transmitted audio signals via the power line L, subjecting them to DA conversion to give audio signals, which are analog signals. Further, the amplifier 220 amplifies the thus received audio signals, which are then phonetically outputted and reproduced by the speaker unit 221.

As described above, in the present embodiment, the power line communication transmitting unit 215 converts audio signals, which are analog signals inputted from the headphone plug 212, into digital signals and transmits them via the power line L connected to the outlet plug 214, thus making it possible to reproduce audio signals when receiving them by the externally attached speaker device 202 connected to the power line L corresponding to power line communications. In other words, since the headphone jack 206 normally equipped on the portable music playing device 201 is used to input signals, it is not necessary to tack on functions for the transmitting power line communications to the portable music playing device 201. Therefore, the portable music playing device 201 is not increased in cost and an ordinary portable music playing device 201 can be used to easily carry out external reproduction.

Further, audio signals are transmitted via the power line L, thereby making it possible to carry out a continuous reproduction from an externally attached speaker device 202 connected to the power line L via the outlet 213 at any given position. It is also possible to carry out reproduction at a plurality of places, on connection to a plurality of externally attached speaker devices 202.
Moreover, since the power line communication connector device 211 is equipped on the cradle main body 210 for placing the portable music playing device 201, an output device connected to the power line L can be used to carry out a continuous reproduction, with the portable music playing device 201 placed on the cradle main body 210.

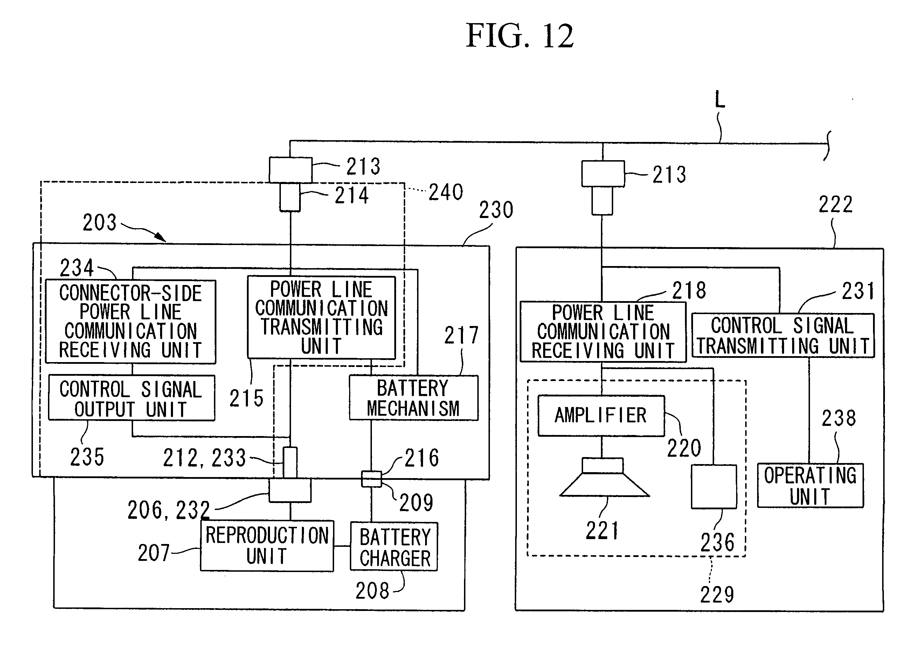

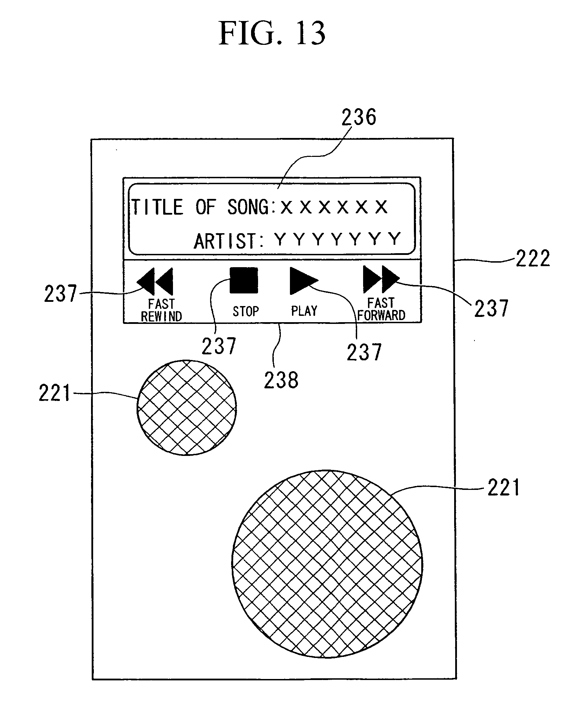

Hereinafter, an explanation will be made for Embodiment 4 of the power line communication connector device of the present invention, the cradle device using the power line communication connector device and the power line communication reproducing system by referring to FIG. 12 and FIG. 13. Additionally, in explaining the following embodiment, the same constituents as those explained in the above embodiments will be given the same symbols or numerals, with the explanation thereof omitted.

Embodiment 4 is different from Embodiment 3 in the following. Specifically, in Embodiment 3, where reproduction is controlled by the portable music playing device 201, for example, operations such as music selection, play, stop, fast forward, fast rewind and the like are conducted, it is necessary to control these operations by the portable music playing device 201 in itself. Whereas, in Embodiment 4, as shown in FIG. 12 and FIG. 13, the reproduction at the portable music playing device 201 can be controlled from an externally attached speaker device 222.

The power line communication reproducing system of Embodiment 4 is provided with a control signal transmitting unit (control signal transmitting means) 231 in which the externally attached speaker device 222 transmits control signals of the portable music playing device 201 to a power line communication connector device 240 of the cradle main body 230 via a power line L and an operating unit 238 for inputting the control signals. The power line communication connector device 240 is provided with a control output terminal 233 which is connectable to the control input terminal 232 of the portable music playing device 201, a connector-side power line communication receiving unit (connector-side power line communication receiving means) 234 for receiving the control signals via the power line L, and a control signal output unit 235 for transmitting the thus received control signals from the control input terminal 232 connected to a control output terminal 233 to the portable music playing device 201.

The control input terminal 232 of the portable music playing device 201 is, for example, a terminal for remote control which is connectable to a controller of headphones or the like. In the present embodiment, the headphone jack 206 acts as the control input terminal 232 as well and the headphone plug 212 acts as the control output terminal 233 as well.
Further, in Embodiment 4, unlike Embodiment 3, as shown in FIG. 12 and FIG. 13, the output unit 229 is provided with a liquid crystal display unit (display unit) 36 for displaying information on the playing content of the thus received audio signals.
The operating unit 238 is equipped on the front face of the externally attached speaker device 222 and provided with a plurality of operation buttons 237 corresponding to respective control signals of the portable music playing device 201. Further, the operating unit 238 is connected to the control signal transmitting unit 231.

In the power line communication reproducing system of Embodiment 4, control signals (signals of music selection, play, stop, fast forward, fast rewind and the like) of the portable music playing device 201 are given as signals of power line communications, and these signals are transmitted to the power line communication connector device 240 from the control signal transmitting unit 231 of the externally attached speaker device 222 via a power line L. Then, the connector-side power line communication receiving unit 234 receives the control signals of signals of power line communications, and moreover the control signal output unit 235 converts the thus received control signals into control signals for the portable music playing device 201, thereby transmitting them to the reproduction unit 207 of the portable music playing device 201 via the control output terminal 233 and the control input terminal 232. As described above, the portable music playing device 201 can be remote-controlled from the externally attached speaker device 222 side.
Further, where audio signals include information on the playing content, information on the playing content is displayed on the liquid crystal display unit 236, thus making it possible to confirm the playing content such as the title of the song and name of the artist from the externally attached speaker device 222.

In the above embodiment, reproduction was carried out by using the portable music playing device 201. However, reproduction may be carried out by other playing devices, for example, a cellular phone and a radio having a signal output terminal for audio signals such as the headphone jack 206 or the like. Further, phonetic reproduction was carried out on the basis of audio signals fromthe portable music playing device 201. However, image signals from a portable image display device (including picture signals) may be used to reproduce an image (a picture). In this instance, an image display device such as a liquid crystal display is used as an output device connected to a power line L.

Further, in the above embodiment, audio signals are transmitted by using the power line L wired to ordinary houses, by which reproduction is carried out by using an externally attached speaker device 202 installed indoors. Reproductionmaybe carried out from a speaker device (an output device) mounted inside a vehicle such as an automobile via a power line wired to a vehicle. In this instance, in place of the outlet plug 214, a cigarette lighter socket plug which can be attached in a removable manner to a cigarette lighter socket connected to the power line of the vehicle is used as a plug unit. More specifically, in this instance, since the cradle device is provided with a plug unit, which is a cigarette lighter socket plug, only the plug unit is inserted into the cigarette lighter socket of the vehicle, thus making it possible to carry out reproduction by an output device such as speakers on the vehicle corresponding to power line communications inside the vehicle. As described above, the plug unit is preferably a cigarette lighter socket plug. However, other types of plug units may be used as long as they are connectable to the power line of a vehicle.
Further, in Embodiment 4, it is acceptable that Dolby (registered trade mark) control or equalizer control may be performed from an externally attached speaker device 222 side.

An explanation has been so far made for preferred embodiments of the present invention, to which the present invention shall not be, however, limited. The present invention may be subjected to addition of the constitution, omission, replacement and other modifications within a scope not departing from the gist of the present invention. The present invention shall not be limited to the above description but will be restricted only by the scope of attached claims.

### INDUSTRIAL APPLICABILITY

The present invention relates to a personal computer adaptor device which is provided with an adaptor-side signal input terminal connectable to a PC-side signal output terminal for audio signals or image signals of a personal computer, a control signal output terminal connectable to an analog signal input terminal of the personal computer, a plug unit connectable to an outlet jack of a power line, a digital converter for converting the audio signals or the image signals inputted from the adaptor-side signal input terminal into digital signals, an adaptor-side power line communication transmitting unit for transmitting the thus converted audio signals or image signals via the power line connected to the plug unit, an adaptor-side power line communication receiving unit for receiving control signals of the personal computer transmitted from an output device connected to the power line via the power line connected to the plug unit, and an analog converter for converting the thus received control signals into analog signals and outputting them from the output terminal of the converted control signals. According to the personal computer adaptor device of the present invention, it is possible to reproduce audio signals and the like in a room different from that in which a personal computer is installed. It is also possible to control the personal computer, which is a playing device.

## Claims

1. A personal computer adaptor device comprising:
an adaptor-side signal input terminal connectable to a PC-side signal output terminal for audio signals or image signals of a personal computer;
a control signal output terminal connectable to an analog signal input terminal of the personal computer;
a plug unit connectable to an outlet jack of a power line;
a digital converter for converting the audio signals or the image signals inputted from the adaptor-side signal input terminal into digital signals;
an adaptor-side power line communication transmittingunit for transmitting the thus converted audio signals or image signals via the power line connected to the plug unit;
an adaptor-side power line communication receiving unit for receiving control signals of the personal computer transmitted from an output device connected to the power line via the power line connected to the plug unit; and
an analog converter for converting the thus received control signals into analog signals and outputting them from the control signal output terminal.

2. The personal computer adaptor device according to claim 1, wherein
the personal computer adaptor device is provided with an AC-DC converter connectable to a power input terminal of the personal computer for converting an alternating current voltage applied to the power line connected to the plug unit into a direct current voltage, thereby supplying the thus converted direct current voltage to the personal computer.

3. The personal computer adaptor device according to claim 1 or claim 2, wherein
the PC-side signal output terminal is a headphone terminal for outputting the audio signals, which are analog signals, and
the analog signal input terminal is a microphone terminal or a line input terminal.

4. The personal computer adaptor device according to one of claim 1 to claim 3 comprising:
a PC cable provided with an input cable having the adaptor-side signal input terminal and an output cable having the control signal output terminal;
a playing device cable having an audio signal output terminal for a playing device different from the personal computer and a playing device input/output terminal connected in a removable manner to a control signal input terminal; and
a PLC-side connector connectable to the PC cable with the digital converter and the analog converter and also connects the playing device cable with the digital converter and the adaptor-side power line communication receiving unit; wherein
the PC cable and the playing device cable are respectively provided with common connectors connected in a removable manner to the PLC-side connector, and the common connectors are in the same connector shape.

5. A personal computer signal reproducing system comprising:
the personal computer adaptor device according to one of claim 1 to claim 4;
a personal computer provided with a PC-side signal output terminal to which the adaptor-side signal input terminal is connected to output audio signals or image signals and an analog signal input terminal to which the control signal output terminal is connected to input the analog signals and which is connected to a power line via the personal computer adaptor device; and
an output device connected to the power line; wherein
the output device is provided with an output-side power line communication receiving unit which is connected to the power line for receiving the audio signals or the image signals via the power line,
an output unit for reproducing the thus received audio signals or image signals,
an operating unit for inputting control signals of the personal computer, and
a control signal transmitting unit for transmitting the control signals inputted into the operating unit to the personal computer adaptor device via the power line, and
the personal computer is provided with a controller which controls the output of the audio signals or the image signals on the basis of the control signals inputted from the analog signal input terminal.

6. A personal computer reproducing method comprising:
a step in which the control signal transmitting unit of the output device connected to a power line transmits the thus inputted control signals of the personal computer via the power line;
a step in which the adaptor-side power line communication receiving unit of the personal computer adaptor device receives the control signals via a plug unit connected to an outlet jack of the power line;
a step in which the analog converter of the personal computer adaptor device converts the thus received control signals into analog signals;
a step in which the analog converter outputs the control signals, which are converted into analog signals, from the analog signal input terminal to the personal computer via a control signal output terminal connected to an analog signal input terminal of the personal computer;
a step in which the controller of the personal computer controls the output of the audio signals or the image signals on the basis of the control signals inputted from the analog signal input terminal;
a step in which the controller of the personal computer outputs the audio signals or the image signals from the PC-side signal output terminal on the basis of the control;
a step in which the digital converter of the personal computer adaptor device converts the audio signals or the image signals inputted from the adaptor-side signal input terminal connected to the PC-side signal output terminal into digital signals;
a step in which the adaptor-side power line communication transmitting unit of the personal computer adaptor device transmits the audio signals or the image signals, which are converted into digital signals, via the power line connected to the plug unit;
a step in which the output-side power line communication receiving unit of the output device receives the audio signals or the image signals via the power line; and
a step in which the output unit of the output device reproduces the thus received audio signals or image signals.

7. A personal computer signal reproducing program which is executable by a computer, the personal computer signal reproducing program comprising:
a step in which the control signal transmitting unit of an output device connected to a power line transmits the thus inputted control signals of a personal computer via the power line,
a step in which the adaptor-side power line communication receiving unit of the personal computer adaptor device receives the control signals via a plug unit connected to an outlet jack of the power line,
a step in which the analog converter of the personal computer adaptor device converts the thus received control signals into analog signals,
a step in which the analog converter outputs the control signals, which are converted into analog signals, from the analog signal input terminal to the personal computer via a control signal output terminal connected to an analog signal input terminal of the personal computer,
a step in which the controller of the personal computer controls the output of audio signals or image signals on the basis of the control signals inputted from the analog signal input terminal,
a step in which the controller of the personal computer outputs the audio signals or the image signals from a PC-side signal output terminal on the basis of the control,
a step in which the digital converter of the personal computer adaptor device converts the audio signals or the image signals inputted from the adaptor-side signal input terminal connected to the PC-side signal output terminal into digital signals,
a step in which the adaptor-side power line communication transmitting unit of the personal computer adaptor device transmits the audio signals or the image signals, which are converted into digital signals, via the power line connected to the plug unit;
a step in which the output-side power line communication receiving unit of the output device receives the audio signals or the image signals via the power line, and
a step in which the output unit of the output device reproduces the thus received audio signals or image signals.

8. An output device control program which is executable by a computer, the output device control program comprising:
a step in which the control signal transmitting unit of the output device connected to a power line transmits the thus inputted control signals of a personal computer via the power line,
a step in which the output-side power line communication receiving unit of the output device receives audio signals and image signals via the power line, and
a step in which the output unit of the output device reproduces the thus received audio signals or image signals; wherein
the audio signals or the image signals received by the output-side power line communication receiving unit of the output device are received by the personal computer adaptor device via the power line, converted into analog signals, thereafter, outputted to the personal computer adaptor device by the personal computer on the basis of the control signals outputted to the personal computer, further converted into digital signals by the personal computer adaptor device, and transmitted via the power line.

9. A personal computer adaptor device control program which is executable by a computer, the personal computer adaptor device control program comprising:
a step in which the adaptor-side power line communication receiving unit of the personal computer adaptor device receives control signals for a personal computer transmitted from an output device connected to a power line via the power line connected to an outlet jack of the power line via a plug unit,
a step in which the analog converter of the personal computer adaptor device converts the thus received control signals into analog signals,
a step in which the analog converter outputs the control signals, which are converted into analog signals, from the analog signal input terminal on the personal computer via a control signal output terminal connected to an analog signal input terminal of the personal computer,
a step in which the digital converter of the personal computer adaptor device converts audio signals or image signals outputted via a PC-side signal output terminal from the personal computer on the basis of the control signals and inputted via an adaptor-side signal input terminal connected to the PC-side signal output terminal into digital signals, and
a step in which the adaptor-side power line communication transmitting unit of the personal computer adaptor device transmits the audio signals or the image signals, which are converted into digital signals, to the output device via the power line connected to the plug unit.

10. The personal computer adaptor device control program according to claim 9, comprising:
a step in which an audio signal output terminal of a playing device different from the personal computer is connected to the digital converter via a playing device cable, and the control signal input terminal of the different playing device is connected to the adaptor-side power line communication receiving unit via the playing device cable, when input is switched to the different playing device, the control signals are converted so as to correspond to the different playing device, and the thus converted control signals are outputted to the control signal input terminal via the playing device cable.

11. A personal computer control program which is executable by a computer, the personal computer control program comprising:
a step in which the controller of the personal computer controls the output of audio signals or image signals on the basis of the control signals inputted via an analog signal input terminal; and
a step in which the controller outputs the audio signals or the image signals to the personal computer adaptor device on the basis of the control via a PC-side signal output terminal connected to an adaptor-side signal input terminal of the personal computer adaptor device; wherein
the control signals inputted via the analog signal input terminal are received by the personal computer adaptor device from the output device through a power line, converted into analog signals, and inputted via a control signal output terminal of the personal computer adaptor device connected to the analog signal input terminal.

12. A power line communication connector device comprising:
a signal input terminal connectable to a signal output terminal for audio signals or image signals for a playing device;
a plug unit connected to a power line; and
a power line communication transmitting means for transmitting the audio signals or the image signals inputted via a signal input terminal via the power line connected to the plug unit.

13. A cradle device comprising:
the power line communication connector device according to claim 12; and
a cradle main body which can place a portable playing device; wherein
the power line communication connector device is provided on the cradle main body.

14. The cradle device according to claim 13, wherein
the signal output terminal is a headphone jack for outputting the audio signals, which are analog signals, and
the signal input terminal is a headphone plug for inputting the audio signals, which are analog signals.

15. The cradle device according to claim 13 or claim 14, wherein
the cradle device is provided inside the cradle main body with a battery mechanism capable of charging a battery charger installed inside the portable playing device by electric power supplied via a power line connected to the plug unit.

16. The cradle device according to one of claim 13 to claim 15, wherein
the plug unit is a cradle device connectable to a power line of a vehicle.

17. The cradle device according to claim 16, wherein
the plug unit is a cigarette lighter socket plug attached in a removable manner to a cigarette lighter socket connected to a power line of a vehicle.

18. A power line communication reproducing system comprising:
the power line communication connector device according to claim 12; and
an output device connected to a power line; wherein
the output device is provided with a power line communication receivingmeans connected to the power line to receive the audio signals or the image signals via the power line, and
an output means for reproducing the thus received audio signals or image signals.

19. The power line communication reproducing system according to claim 18 comprising:
a control signal transmitting means in which the output device transmits control signals of the playing device to the power line communication connector device via a power line; and
an operating unit for inputting the control signals wherein;
the power line communication connector device is provided with a control output terminal connectable to a control input terminal of the playing device,
a connector-side power line communication receiving means for receiving the control signals via a power line, and
a control signal output unit for transmitting the thus received control signals to the playing device via the control input terminal connected to the control output terminal.

20. The power line communication reproducing system according to claim 18 or claim 19, wherein
the output means is provided with a display unit for displaying information on the playing content included in the thus received audio signals or image signals.
